# EUROPEAN PATENT APPLICATION

(11) **EP 4 228 163 A1**
(43) Date of publication of application: **16.08.2023**
(21) Application number: 21890951.3
(22) Date of filing: 26.10.2021
(51) Int. Cl.: H04B 1/401, H04B 7/06

(54) **RADIO FREQUENCY SYSTEM, ANTENNA SWITCHING CONTROL METHOD AND CUSTOMER PREMISE EQUIPMENT**

(30) Priority: 12.11.2020 CN 202011262331
(71) Applicant: GUANGDONG OPPO MOBILE TELECOMMUNICATIONS CORP., LTD., Dongguan, Guangdong 523860 (CN)
(72) Inventor: ZHOU, Lei, Dongguan, Guangdong 523860 (CN)
(74) Representative: Novagraaf Technologies
(86) International application number: PCT/CN2021/126228
(87) International publication number: WO 2022/100424

(57) **Abstract**

A radio frequency system. The radio frequency system comprises: an antenna group (110), which comprises M transmitting antennas and N receiving antennas; a transceiving circuit (120), which is respectively connected to the M transmitting antennas and at least two receiving antennas, and is used for selectively turning on a transmitting path in which at least one transmitting antenna is located or a receiving path in which any receiving antenna is located and supporting the transceiving processing of a radio frequency signal; a plurality of receiving circuits (140), which are connected to the remaining receiving antennas, and are used for supporting the receiving processing of the radio frequency signal; and a radio frequency processing circuit (130), which is respectively connected to the transceiving circuit (120) and the receiving circuits (140), and is used for determining a target transmitting antenna according to network information of the radio frequency signal measured by a plurality of receiving antenna groups and controlling the transceiving circuit to select the target transmitting antenna to transmit the radio frequency signal, wherein the receiving antenna group comprises K receiving antennas.

## Description

### CROSS REFERENCE TO RELATED APPLICATIONS

The present application claims the priority of the Chinese patent application No. 202011262331.4, filed on November 12, 2020, in the title of "Radio Frequency System, Antenna Switching Control Method, and Customer Premise Equipment", and the contents of which are incorporated herein by its entireties.

### TECHNICAL FIELD

The present disclosure relates to the field of antennas, and in particular to a radio frequency system, an antenna switching control method, and a customer premise equipment.

### BACKGROUND

The description herein provides background information only in relation to the present disclosure and does not necessarily constitute prior art of the present disclosure.

A customer premise equipment (CPE) is a mobile signal access device configured to receive mobile signals and forward the mobile signals through wireless Wi-Fi signals. The CPE is also a device that converts high speed signals, such as 4G or 5G signals, into Wi-Fi signals. A transmitting antenna and a receiving antenna arranged in the CPE may have a low throughput, and therefore, communication performance of the CPE may be affected.

### SUMMARY OF THE DISCLOSURE

The present disclosure provides a radio frequency system, an antenna switching control method, a customer premise equipment, and a computer-readable storage medium.

A radio frequency system, applied to a customer premise device, the radio frequency including:
an antenna set, including M transmitting antennas and N receiving antennas;
a transceiver circuit, connected to the M transmitting antennas and at least two of the N receiving antennas and configured to selectively conduct a transmitting path in which at least one of the M transmitting antennas is located or a receiving path in which any of the at least two of the N receiving antennas is located and configured to support transceiving radio frequency signals;
a plurality of receiving circuits, connected to the remaining receiving antennas of the N receiving antennas other than the at least two receiving antennas and configured to support reception of the radio frequency signals;
a radio frequency processing circuit, connected to the transceiver circuit and the plurality of receiving circuits and configured to determine a target transmitting antenna based on network information of the radio frequency signals measured by a plurality of receiving antenna sets and configured to control the transceiver circuit to select the target transmitting antenna to transmit the radio frequency signals, wherein each of the plurality of receiving antenna sets comprises K receiving antennas, M ≥ 2, 2 ≤ K ≤ N, and N ≥ 3, the target transmitting antenna is at least one of the M transmitting antennas.

An antenna switching control method, including:
configuring a plurality of transmitting and receiving antenna sets based on N receiving antennas, wherein each of the plurality of transmitting and receiving antenna sets comprise K antennas;
configuring corresponding transmitting paths for M transmitting antennas via a transceiver circuit;
determining a target transmitting antenna based on network information of radio frequency signals measured by a plurality of receiving antenna sets;
controlling the transceiver circuit to select the target transmitting antenna to transmit the radio frequency signals, wherein each of the plurality of receiving antenna sets comprises K receiving antennas, M ≥ 2, 2 ≤ K ≤ N, and N ≥ 3, the target transmitting antenna is at least one of the M transmitting antennas.

A customer premise equipment includes the radio frequency system as described in the above.

A customer premise equipment includes a memory and a processor. The processor stores computer programs, and the computer programs are configured to, when being executed by the processor, cause the processor to perform the antenna switching control method as described in the above.

A computer-readable storage medium has computer programs stored. The computer programs are configured to, when being executed by a processor, perform the antenna switching control method as described in the above.

Details of one or more embodiments of the present disclosure are described in the accompanying drawings and description. Other features, objects and advantages of the present disclosure will be apparent based on the specification, the accompanying drawings and the claims.

### BRIEF DESCRIPTION OF THE DRAWINGS

In order to illustrate more clearly the technical solutions in the embodiments or the related art of the present disclosure, the accompanying drawings used for the description of the embodiments or the related art will be described in brief in the following. Apparently, the drawings in the following description are only some of the embodiments of the present disclosure, and other drawings may be obtained by any ordinary skilled person in the art based on these drawings without any creative work.
FIG. 1 is a structural diagram of a radio frequency system according to an embodiment of the present disclosure.
FIG. 2 is a structural diagram of a radio frequency system according to an embodiment of the present disclosure.
FIG. 3 is a structural diagram of a radio frequency system according to an embodiment of the present disclosure.
FIG. 4 is a diagram of arranging eight antennas according to an embodiment of the present disclosure.
FIG. 5 is a structural diagram of a radio frequency system according to an embodiment of the present disclosure.
FIG. 6 is a structural diagram of a radio frequency system according to an embodiment of the present disclosure.
FIG. 7 is a structural diagram of a radio frequency system according to an embodiment of the present disclosure.
FIG. 8 is a top view of an antenna set arranged in a customer premise equipment according to an embodiment of the present disclosure.
FIG. 9 is a flow chart of an antenna switching control method according to an embodiment of the present disclosure.
FIG. 10 is a flow chart of determining a target transmitting antenna based on network information of radio frequency signals detected by a plurality of receiving antenna sets.
FIG. 11 is a flow chart of an antenna switching control method according to another embodiment of the present disclosure.

### DETAILED DESCRIPTION

In order to make the purpose, technical solutions and advantages of the present disclosure clearer and more understandable, the application is described in further detail below by referring to the accompanying drawings and embodiments. It shall be understood that specific embodiments described herein are intended to explain the present disclosure only and are not intended to limit the present disclosure.

It shall be understood that terms "first", "second", and so on, in the present disclosure are used herein to describe various elements, but the elements are not limited by the terms. The terms are used only to distinguish one element from another element. For example, without departing from the scope of the present disclosure, a first switch module may be named as a second switch module, and similarly, the second switch module may be named as the first switch module. Both the first switch module and the second switch module are switch modules, but they are not one switch module.

Furthermore, terms "first" and "second" are used for descriptive purposes only and shall not be understood as indicating or implying relative importance or implicitly specifying the number of technical features indicated. Therefore, a feature defined by the "first" and "second" may explicitly or implicitly include at least one such feature. In the description of the present disclosure, "plurality" means at least two, such as two, three, and so on, unless otherwise expressly and specifically limited.

The present disclosure provides a radio frequency system which may be applied in a customer premise equipment. The customer premise equipment is configured to achieve network access function, converting a public network of an operator WAN into a home local area network LAN of a user. Internet broadband access methods currently available in the art may include a fibre optic access (FTTH), a digital telephone line access (DSL), a cable TV line access (Cable), a mobile access (Mobile, i.e., wireless CPE). The CPE is a mobile signal access device that receives mobile signals and forwards the mobile signals as wireless Wi-Fi signals. The CPE is also a device that converts high-speed 4G or 5G signals into the Wi-Fi signals and can support a plurality of mobile terminals to access one network at the same time. The present disclosure provides a customer premise equipment (CPE). The CPE includes a housing, a memory (which may include one or more computer-readable storage media), a processor, a peripheral device interface, and an input/output (I/O) sub-system. These components optionally may communicate via one or more communication buses or signal lines. Any ordinary skilled person in the art shall understand that the above CPE examples shall not limit the CPE.

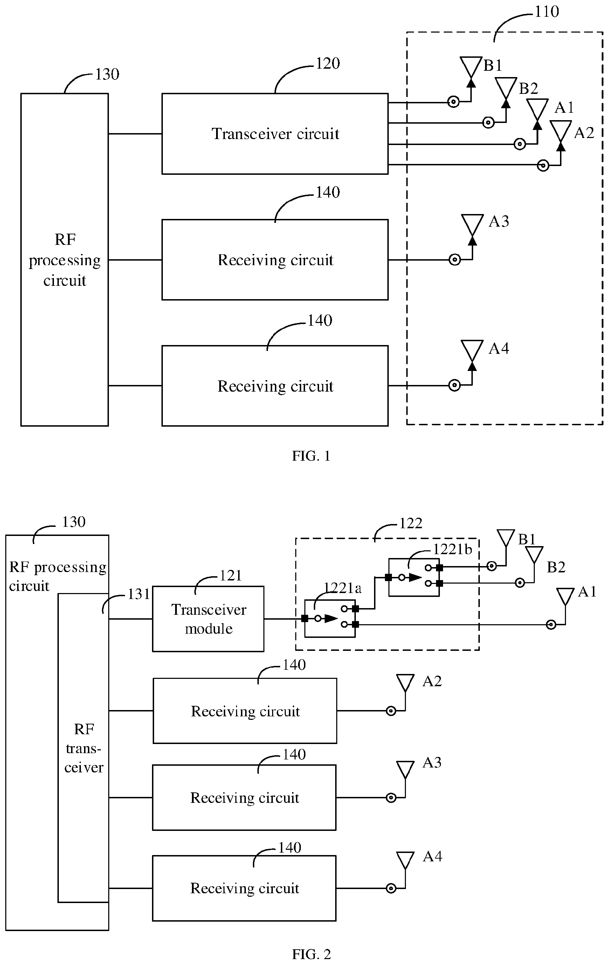

FIG. 1 is a structural diagram of a radio frequency system according to an embodiment of the present disclosure. As shown in FIG. 1, in an embodiment, the radio frequency (RF) system includes an antenna set 110, a transceiver circuit 120, an RF processing circuit 130, and a plurality of receiving circuits 140. The antenna set 110 includes M transmitting antennas (such as B1, B2) and N receiving antennas (such as A1, A2, A3, A4). The M ≥ 2, the N ≥ 3, and each of the M and the N is a positive integer. The M transmitting antennas and the N receiving antennas may transmit and receive RF signals in a preset frequency band. For example, each of the M transmitting antennas and the N receiving antennas may be a 5G antenna, a 4G antenna, a Wi-Fi antenna, a Bluetooth antenna, and so on, and is configured transmit and receive RF signals of a corresponding frequency band. The number N of the receiving antennas may be 2, 3, 4, 6, 8, 10 and so on, to meet the communication demands of the CPE. The CPE may select K antennas from the N receiving antennas to serve as a receiving antenna set and set the receiving antenna set to be directed to a direction of a downlink incoming wave from the base station to receive the RF signals. 2 ≤ K ≤ N, the K may be 2, 3, 4 or more. Exemplarily, the K may be 4 when the M is 8; and the K may be 2 when the M is 4.

The transceiver circuit 120 is connected to the M transmitting antennas (such as B 1, B2) and at least two of the N receiving antennas (such as A1, A2) and is configured to selectively conduct a transmitting path where at least one transmitting antenna is arranged or conduct a receiving path where any of the receiving antennas is arranged. Further, the transceiver circuit 120 may support transmitting and receiving the RF signals. Specifically, the transceiver circuit 120 may support a single channel transmitting mode of the RF signals. That is, one transmitting antenna may be controlled at a time to transmit the RF signals. The transceiver circuit 120 may also support a dual channel transmitting mode of the RF signals, and that is, two transmitting antennas may be controlled at the same time to transmit the RF signals. In addition, the transceiver circuit 120 may receive the RF signals based on controlling any receiving antenna and perform reception processing on the RF signals. It shall be understood that the transmitting antenna and the receiving antenna connected to the transceiver circuit 120 can be controlled independently. That is, the receiving channel where the receiving antenna is located and the transmitting channel where the transmitting antenna is located may be arranged separated from each other.

The plurality of receiving circuits 140 in the RF system may be connected to the remaining receiving antennas (such as A3, A4), which are not connected to the transceiver circuit 120, to support the reception processing of the RF signals. The number of the receiving circuits 140 is more than one. Each of the plurality of receiving circuits 140 may be connected to at least one receiving antenna. When the receiving circuits 140 are connected to a plurality of receiving antennas, at a same moment, each receiving circuit 140 may select any of the connected receiving antennas to receive the RF signals.

To be noted that the receiving antennas connected to the receiving circuits 140 and the receiving antennas connected to the transceiver circuit 120 are different antennas, and receiving antennas connected to one of the plurality of receiving circuits 140 are different from receiving antennas connected to another one of the plurality of receiving circuits 140.

The RF processing circuit 130 is connected to the transceiver circuit 120 and each of the plurality of receiving circuits 140. The RF processing circuit 130 may be configured to determine a target transmitting antenna based on network information of the RF signals measured by a plurality of receiving antenna sets, and to control the transceiver circuit 120 to select the target transmitting antenna to transmit the RF signals. The receiving antenna set includes K receiving antennas, 2 ≤ K ≤ N, and the target transmitting antenna is at least one of the M transmitting antennas. Specifically, the RF processing circuit 130 may configure the number K of the receiving antennas in the receiving antenna set based on the multiple input multiple output (MIMO) technology that is supported by the RF system. The RF processing circuit 130 may configure the N receiving antennas into the plurality of receiving antenna sets based on predetermined rules, allowing each receiving antenna set to include K receiving antennas. Exemplarily, when the CPE supports 2*2 MIMO, a receiving antenna set of the CPE may include 2 receiving antennas; and when the CPE supports 4*4 MIMO, a receiving antenna set of the CPE may include 4 receiving antennas.

When the transceiver circuit 120 selects a current transmitting antenna (one or two) to transmit the RF signals, the RF processing circuit 130 may control the transceiver circuit 120 and the plurality of receiving circuits 140 to control the plurality of receiving antenna sets to receive the RF signals based on a preset switching strategy. The RF processing circuit 130 may measure the network information of the RF signals correspondingly based on the plurality of receiving antenna sets. The RF processing circuit 130 may determine a target receiving antenna set based on the network information corresponding to the plurality of receiving antenna sets. Further, the RF processing circuit 130 may determine the target transmitting antenna based on an incoming wave direction of the RF signals received by the target receiving antenna set. While the target transmitting antenna is being determined, the RF processing circuit 130 may control the transceiver circuit 120 to select the target transmitting antenna to transmit the RF signals. The number of target transmitting antennas is the same as the number of transmitting antennas selected by the transceiver circuit 120. That is, when the transceiver circuit 120 selects one transmitting antenna to transmit the RF signals, the number of corresponding target transmitting antennas is one; and when the transceiver circuit 120 selects two transmitting antennas to transmit the RF signals, the number of corresponding target transmitting antennas is two.

In the present embodiment, the RF system includes M transmitting antennas, N receiving antennas, the transceiver circuit 120, the plurality of receiving circuits 140, and the RF processing circuit 130. The RF processing circuit 130 may be configured to select K receiving antennas from the N receiving antennas to serve as a receiving antenna set, and to determine the target receiving antenna set from the plurality of receiving antenna sets based on the network information of the RF signals correspondingly measured by the plurality of receiving antenna sets. In this way, the RF processing circuit 130 may determine a major coverage area of the RF system transmission based on the incoming wave direction (or a major incoming wave direction) of the target receiving antenna set. That is, the RF processing circuit determines the target transmitting antenna based on the incoming wave direction of the target receiving antenna set. The incoming wave direction of the target receiving antenna set may provide targeted guidance for a major downlink coverage direction of the RF system during an operating time period, allowing the RF system to transmit the RF signals to the base station more directionally. In this way, the throughput may be increased. Further, since the plurality of transmitting antennas are arranged, a range covered by transmission of the RF system may be expanded.

In an embodiment, the N receiving antennas are spaced apart from each other and are arranged along a circumference of the CPE. Further, radiating planes the N receiving antennas are oriented towards at least three different directions. It is also understood that each receiving antenna has a radiating plane. The radiating plane may be understood as a plane in which a radiating body of the receiving antenna for radiating the RF signals is located. Rading planes of the receiving antennas are orientated towards different directions, and therefore, the receiving antennas may have different beam scanning ranges and different incoming wave directions. The N receiving antennas may be set at different locations of the CPE, such that radiating planes of the N receiving antennas are oriented towards at least three directions, allowing beam scanning ranges of all the receiving antennas to achieve 360° omnidirectional coverage in a horizontal plane. The horizontal plane shall be understood as a plane formed by centers of each of the N receiving antennas.

Exemplarily, when N=3, radiating planes of the three receiving antennas A1, A2, A3 are orientated towards three directions, a radiating plane of any one of the three receiving antennas A1, A2, A3 and a radiating plane of another one of the three receiving antennas A1, A2, A3 are orientated towards different directions. That is, each of the three receiving antennas has a unique radiating plane. When N = 4, radiating planes of the four receiving antennas A1, A2, A3, A4 are orientated towards four directions, a radiating plane of any one of the four receiving antennas A1, A2, A3, A4 and a radiating plane of another one of the four receiving antennas A1, A2, A3, A4 are orientated towards different directions. That is, each of the four receiving antennas has a unique radiating plane. When N = 8, radiating planes of the eight receiving antennas are orientated towards eight directions, a radiating plane of any one of the eight receiving antennas and a radiating plane of another one of the eight receiving antennas are orientated towards different directions. That is, each of the eight receiving antennas has a unique radiating plane. When N = 8, radiating planes of the eight receiving antennas are orientated towards four directions, a radiating plane of any one of the eight receiving antennas and a radiating plane of another one of the eight receiving antennas are orientated towards different directions. That is, every two of the eight receiving antennas has one radiating plane.

In one embodiment, radiating planes of the N receiving antennas are orientated towards at least three different directions. At least two of the radiating planes of the N receiving antennas that are adjacent to each other and orientated towards different directions are included in the K receiving antennas. In particular, the K receiving antennas in the receiving antenna set may be determined based on the number N of the receiving antennas. Two or three or four of the radiating planes of the N receiving antennas that are adjacent to each other and orientated towards different directions are included in the K receiving antennas.

The M transmitting antennas may be spaced apart from each other and are arranged along the circumference of the CPE. The M transmitting antennas are evenly distributed along the circumference of the CPE, such that the transmission coverage of the CPE is evenly distributed around the CPE, and no blind spot exists. An orientation direction of a radiation plane of any one of the M transmitting antennas is different from an orientation direction of a radiation plane of another one of the M transmitting antennas. Furthermore, a beam scanning range corresponding to any one of the M transmitting antennas is different from a beam scanning range corresponding to another one of the M transmitting antennas. Arranging the M transmitting antennas at different locations of the CPE allows a beam scanning range of all the transmitting antennas to reach 360° omnidirectional coverage of the horizontal plane.

Radiating planes of the N receiving antennas in the present embodiment are orientated towards at least three different directions. At least two of the radiating planes of the N receiving antennas that are adjacent to each other and orientated towards different directions are included in the K receiving antennas in the receiving antenna set, and a beam scanning range of the K receiving antennas may reach 360° omnidirectional coverage of the horizontal plane.

As shown in FIG. 2, in an embodiment, the transceiver circuit 120 supports the single channel transmitting mode. Specifically, the transceiver circuit 120 includes a transceiver module 121 and a first switch module 122. The transceiver module 121 is connected to an RF transceiver 131 in the RF processing circuit 130. The transceiver module 121 may support a transceiving processing on the RF signals. For example, the transceiver module 121 may be configured with a receiving path and a transmitting path. The receiving path may include a filter, a low noise amplifier, and so on, to perform filtering and amplification operations on the RF signals received by each receiving antenna. The transmitting path may include a power amplifier, a filter, and so on, to perform amplification and filtering operations on the RF signals to transmit the RF signals to a corresponding transmitting antenna.

In an embodiment, the transceiver module 121 may be an L-PA Mid element. The L-PA Mid element may be understood as a power amplifier module including duplexers with LNA (L-PA Mid) that supports RF signal transmission and reception. That is, the L-PA Mid element is a power amplifier module that integrates a low noise amplifier, a power amplifier, a filter, and so on. In this way, integration of the elements may be increased, a space occupied by the entire device may be reduced.

A first end of the first switch module 122 is connected to the transceiver module 121, and a plurality of second ends of the first switch module 122 are connected to the transmitting antennas and the receiving antennas in one-to-one correspondence, i.e., each of a plurality of second ends of the first switch module 122 is connected to one corresponding transmitting antenna or one corresponding receiving antenna, to selectively conduct the transmitting path in which the transmitting antenna is located or the receiving path in which any receiving antenna is located. The first switch module 122 may include at least two switch units (such as a switch unit 1221a and a switch unit 1221b). A type of each switch unit and the number of the switch units may be determined based on the number M of transmitting antennas and the number N of receiving antennas connected to the first switch module 122. Exemplarily, when the number of transmitting antennas is two, and when the number of receiving antennas connected to the first switch module 122 is one, the first switch module 122 may include two single blade double throw (SPDT) switches. The switch unit 1221a may be noted as a first SPDT switch, and the switch unit 1221b may be noted as a second SPDT switch. A first end of the first SPDT switch is connected to the transceiver module 121, one second end of the first SPDT switch is connected to the receiving antenna A1, the other second end of the first SPDT switch is connected to a first end of the second SPDT switch. One of two second ends of the second SPDT switch is connected to the transmitting antenna B 1, and the other one of two second ends of the second SPDT switch is connected to the transmitting antenna B2. The transmitting path in which any of the transmitting antennas is located can be conducted by controlling the first SPDT switch and the second SPDT switch. The receiving path in which any receiving antenna is located can be conducted by controlling the first SPDT switch. In this way, the transmitting antennas and the receiving antennas may be controlled separately.

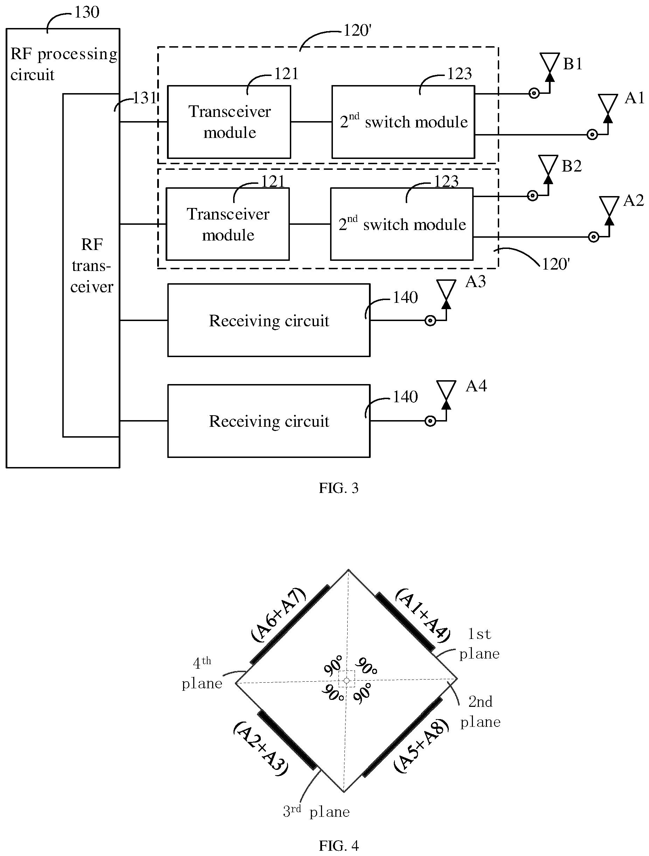

As shown in FIG. 3, in an embodiment, the transceiver circuit 120 supports the dual channel transmitting mode. The transceiver circuit 120 includes a two transceiver sub-circuits 120'. The transceiver sub-circuit 120' includes a transceiver module 121 and a second switch module 123. The transceiver module 121 in the transceiver sub-circuit 120' is the same as the transceiver module 121 in the above embodiment and will not be repeatedly described herein. A first end of the second switch module 123 is connected to the transceiver module 121. A plurality of second ends of the second switch module 123 are connected to at least one transmitting antenna and at least one receiving antenna in one-to-one correspondence, that is, each of the plurality of second ends of the second switch module 123 is connected to one corresponding transmitting antenna or one corresponding receiving antenna. The transceiver module 121 is connected to the transceiver circuit 120. The second switch module 123 may include at least one switch unit. A type of the switch unit and the number of switch units may be determined based on the number of transmitting antennas connected to the second switch module 123 and the number of receiving antennas connected to the second switch module 123. Exemplarily, when one transmitting antenna is connected to the second switch module 123 and one receiving antenna is connected to the second switch module 123, the second switch module 123 may include a third SPDT switch. Specifically, a first end of the third SPDT switch is connected to the transceiver module 121. One second end of the third SPDT switch is connected to the transmitting antenna, and the other second end of the third SPDT switch is connected to the receiving antenna. The transmitting path where the transmitting antenna is located and the receiving path where the receiving antenna is located may be conducted by controlling the third SPDT switch, such that the transmitting antenna and the receiving antenna can be controlled separately.

To be noted that in the present embodiment, the number of transmitting antennas and/or the receiving antennas, which are included in one of the two transceiver sub-circuits 120 and connected to the second switch module 123, may be equal to or different from the number of transmitting antennas and/or the receiving antennas, which are included in the other one of the two transceiver sub-circuits 120 and connected to the second switch module 123. The number may be determined based on actual needs and may not be limited to the above description.

With the advent of the 5G era, the RF system may support both traditional 2/3/4G networks and the 5G NR network (including NSA and SA solutions). When the RF system supports 5G communication, the 4*4 MIMO technology may be generally applied to achieve receiving antenna assignment, eventually allowing downlink 4*4 MIMO to have best data transmission performance. When the RF system supports 4*4 MIMO, the receiving antenna set may include four receiving antennas selected from the N receiving antennas. The four receiving antennas have at least two radiating planes that are arranged adjacent to each other and are orientated towards different directions.

In an embodiment, the antenna set 110 may include eight receiving antennas, denoted as A1, A2, A3, A4, A5, A6, A7, and A8. The eight receiving antennas may include NR directional receiving antennas and/or NR non-directional receiving antennas. The eight receiving antennas may be configured to transmit and receive 5G signals in the Sub-6G band, i.e., sub-6G signals. The sub-6G signals may include 5G signals in the frequency bands n41, n77, n78, n79, B46, and so on, and a frequency range of the sub-6G signals are from 2.496 GHz to 6 GHz.

As shown in FIG. 4, the eight receiving antennas are arranged into four antenna pairs, denoted as an antenna pair 1, an antenna pair 2, an antenna pair 3 and an antenna pair 4. The four antenna pairs are spaced apart from each other. The four antenna pairs are arranged along the circumference of the CPE and are disposed on four planes respectively. Two antennas of one antenna pair are distributed on one plane. Exemplarily, the antenna pair 1, the antenna pair 2, the antenna pair 3 and the antenna pair 4 are arranged in a counterclockwise direction, the antenna pair 1 is arranged on a first plane, the antenna pair 2 is arranged on a second plane, the antenna pair 3 is arranged on a third plane, and the antenna pair 4 is arranged on a fourth plane. In this way, the beam scanning range of the eight receiving antennas may cover the entire horizontal plane of 360°.

The antenna A1 and the antenna A4 form the antenna pair 1. The antenna pair 1 is distributed on the first plane. Each of the antenna A1 and the antenna A4 has a radiating plane 1, orientated towards a first direction. The antenna A6 and the antenna A7 form the antenna pair. The antenna pair is distributed on the fourth plane. Each of the antenna A6 and the antenna A7 has a radiating plane 2, orientated towards a second direction. The antenna A2 and the antenna A3 form the antenna pair 3. The antenna pair 3 is distributed on the third plane. Each of the antenna A2 and the antenna A3 has a radiating plane 3, orientated towards a third direction. The antenna A5 and the antenna A8 form the antenna pair 4. The antenna pair 4 is distributed on the second plane. Each of the antenna A5 and the antenna A8 has a radiating plane 4, orientated towards a fourth direction. An angular range of an azimuths corresponding to each of the first direction, the second direction, the third direction, and the fourth direction is 90°.

The M transmitting antennas are spaced apart from each other and are evenly distributed along the circumference of the CPE. An orientation of the radiating plane of any one of the plurality of transmitting antennas is different from an orientation of the radiating plane of another one of the plurality of transmitting antennas. That is, the coverage of the transmitting beam of any one of the plurality of transmitting antennas is different from the coverage of the transmitting beam of another one of the plurality of transmitting antennas. The M transmitting antennas may be evenly distributed at different positions of the CPE, ensuring that the transmission coverage of all the transmitting antennas of the CPE is evenly distributed, and no blind spot exists.

In an embodiment, the transceiver circuit 120 supporting the single channel transmitting module will be illustrated by taking N to be equal to 8, taking K to be equal to 4, and taking the number of receiving circuits 140 to be equal to 3. The transceiver circuit 120 includes a transceiver module 121 and a first switch module 122. A first end of the first switch module 122 is connected to the transceiver module 121. A plurality of second ends of the first switch module 122 are connected to the M transmitting antennas (such as B1 and B2) and the two receiving antennas A1 and A2 in one-to-one correspondence, that is, each of the plurality of second ends of the first switch module 122 is connected to one of the M transmitting antennas (such as B1 and B2) or one of the two receiving antennas A1 and A2.

Each receiving circuit 140 is connected to two receiving antennas and determines to conduct a receiving path where either receiving antenna is located. That is, the three receiving circuits 140 may be noted as a first receiving circuit 140-1, a second receiving circuit 140-2, and a third receiving circuit 140-3. A first receiving circuit 140-1 may be connected to the receiving antenna A3 and the receiving antenna A4. A second receiving circuit 140-2 may be connected to the receiving antenna A5 and the receiving antenna A6. A third receiving circuit 140-3 may be connected to the receiving antenna A7 and the receiving antenna A8. Each receiving circuit 140 is configured to conduct the receiving path in which either of the two receiving antennas connected to the receiving circuit 140 is located.

In an embodiment, the first switch module 122 includes a first switch unit 1221, a second switch unit 1222, and a third switch unit 1223. A first end of the first switch unit 1221 is connected to the transceiver module 121. One second end of the first switch unit 1221 is connected to the two receiving antennas A1 and A2 via the second switch unit 1222, and the other second end of the first switch unit 1221 is connected to the M transmitting antennas via the third switch unit 1223. Specifically, each of the first switch unit 1221 and the second switch unit 1222 may be the SPDT switch. A type of the third switch unit 1223 may be determined according to the number M of transmitting antennas. Exemplarily, when the M is 2, the third switch unit 1223 may be the SPDT switch; and when the M is 3, the third switch unit 1223 may be a SP3T switch.

In an embodiment, the receiving circuit 140 includes a receiving module 141 and a third switch module 142. The receiving module 141 is connected to the RF processing circuit 130 to support reception of the RF signals. Specifically, the receiver module 141 may include a low noise amplifier, a filter, and so on, and may filter and amplify the RF signals received by the receiving antenna and output processed RF signals to the RF transceiver 131. A first end of the third switch module 142 is connected to the receiver module 141, and two second ends of the third switch module 142 are connected to the two receiving antennas in one-to-one correspondence. In this way, the receiving path where either of the receiving antennas connected to the third switch module 142 is located may be selected and conducted.

In an embodiment, the receiver module 141 may be a diversity receive (DRX) element, a low noise amplifier front end module (LFEM) element, and so on, which integrates the low noise amplifier and the filter therein, such that integration of elements may be improved, and the space occupied by the device may be reduced. The present embodiment does not limit a specific type of the receiver module 141.

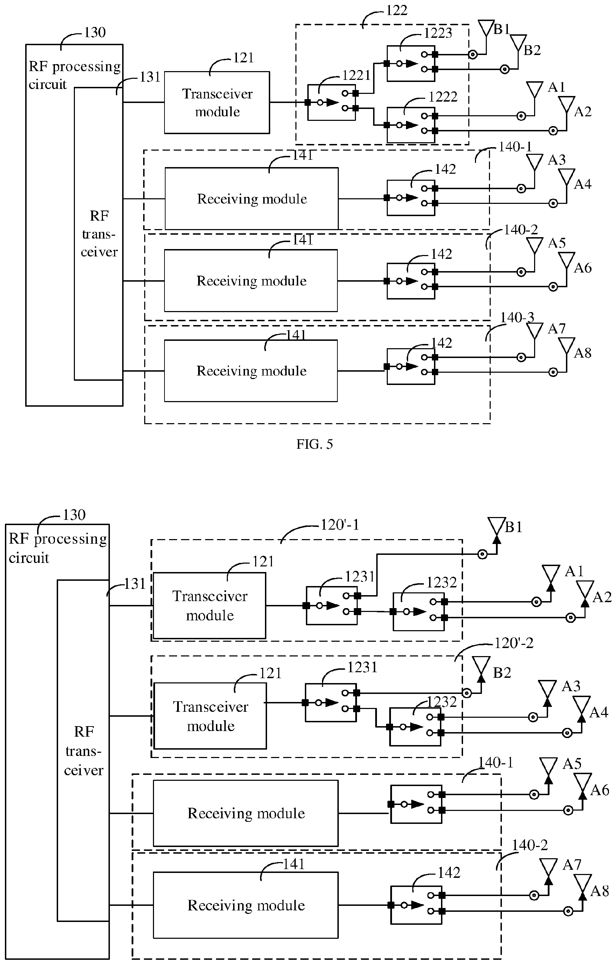

Based on the RF system as shown in FIG. 5, the RF processing circuit 130 may control the first switch module 122 to conduct the transmitting path where any transmitting antenna is located to transmit RF signals to the base station, and may control the first switch module 122 and the third switch module 142 to conduct the receiving path where four receiving antennas of the plurality of receiving antenna sets are located based on a predetermined switching strategy to determine the target receiving antenna set based on the network information correspondingly obtained by the plurality of receiving antenna sets. Further, the target transmitting antenna is determined based on the major incoming wave direction of the target receiving antenna set. Exemplarily, the current transmitting antenna is transmitting antenna B1. When the target transmitting antenna is the transmitting antenna B1, the current transmitting antenna is maintained to transmit the RF signals to the base station. When the target transmitting antenna is the transmitting antenna B2, the first switch module 122 is controlled to disconnect the transmitting path where the transmitting antenna B1 is located and to conduct the transmitting path where the transmitting antenna B2 is located, such that the transmitting antenna B2 is operating to transmit the RF signals to the base station.

In an embodiment, the transceiver circuit 120 supporting the dual channel transmitting mode will be illustrated by taking the N to be equal to 8, taking the K to be equal to 4, and taking the number of receiving circuits 140 to be equal to 2. The transceiver circuit 120 includes two transceiver sub-circuits 120'-1 and 120'-2. Each of the two transceiver sub-circuits includes a transceiver module 121 and a second switch module. A first end of the second switch module is connected to the transceiver module 121, and a plurality of second ends of the second switch module are connected to at least one transmitting antenna and two receiving antennas in one-to-one correspondence, i.e., one of the plurality of second ends of the second switch module is connected to one transmitting antenna or one of the two receiving antennas. The number of transmitting antennas, which is included in one of the two transceiver sub-circuits and connected to the second switch module 123, may be equal to or different from the number of transmitting antennas, which is included in the other one of the two transceiver sub-circuits and connected to the second switch module 123. Exemplarily, when the M is an even number, the number of transmitting antennas connected to each second switch module is M/2; when the M is an odd number, the number of transmitting antennas connected to each second switch module may be arbitrarily determined.

In an embodiment, the second switch module includes a fourth switch unit 1231 and a fifth switch unit 1232. A first end of the fourth switch unit 1231 is connected to the transceiver module 121. One second end of the fourth switch unit 1231 is connected to two receiving antennas via the fifth switch unit 1232, and the other second end of the fourth switch unit 1231 is connected to the transmitting antennas correspondingly. Specifically, the fifth switch unit 1232 may be the SPDT switch. A type of the fourth switch unit 1231 may be determined according to the number M of transmitting antennas. Exemplarily, when the M is 2, the fourth switch unit 1231 may be the SPDT switch; and when the M is 4, the third switch unit 1223 may be the SP3T switch.

The two transceiver sub-circuits may include a first transceiver sub-circuit 120'-1 and a second transceiver sub-circuit 120'-2. When the number M of transmitting antennas is 2, the first transceiver sub-circuit 120'-1 may be connected to the transmitting antenna B1 via the fourth switch unit 1231. The first transceiver sub-circuit 120'-1 may be connected to the receiving antennas A1 and A2 via the fourth switching unit 1231. The first transceiver sub-circuit 120'-1 may be connected to the receiving antennas A1 and A2 via the fourth switching unit 1231 and the fifth switching unit 1232. The second transceiver sub-circuit 120'-2 may be connected to the transmitting antenna B2 via the fourth switch unit 1231. The second transceiver sub-circuit 120'-2 may be connected to the receiving antennas A3 and A4 via the fourth switching unit 1231 and the fifth switching unit 1232.

Each receiving circuit 140 is connected to two receiving antennas, and the receiving path where either receiving antenna is located may be selected to be conducted. That is, the two receiving circuits 140 may be noted as a first receiving circuit 140-1 and second receiving circuit 140-2. The first receiving circuit 140-1 may be connected to receiving antennas A5 and A6. The second receiving circuit 140-2 may be connected to receiving antennas A7 and A8. Each receiving circuit 140 is configured to select and conduct the receiving path in which either of the two antennas connected to the receiving circuit is located.

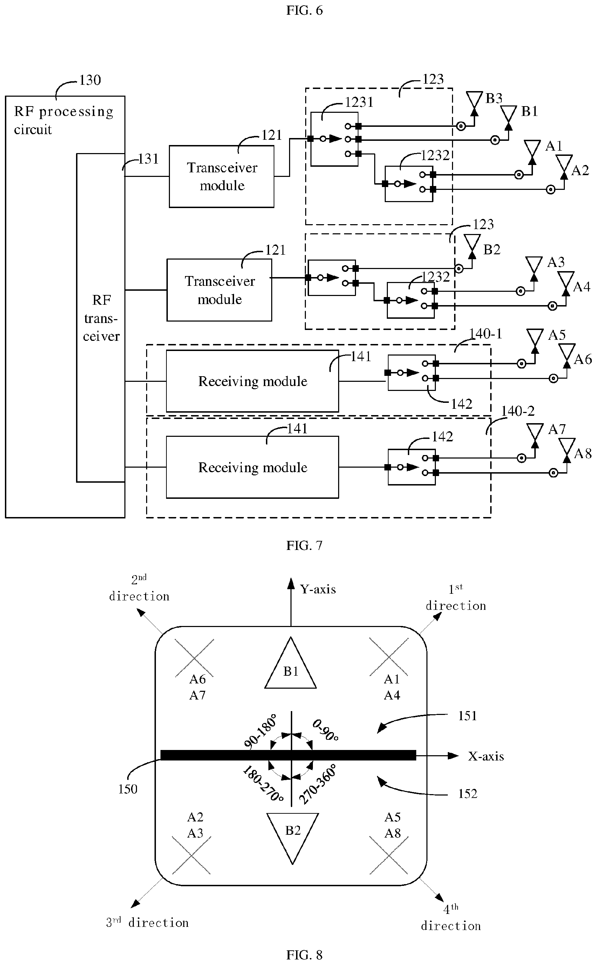

As shown in FIG. 7, the RF system supports the dual channel transmitting mode and includes three transmitting antennas B 1, B2 and B3. The RF processing circuit 130 may control the second switch module 123 to simultaneously conduct the transmitting paths where two transmitting antennas are located, allowing the RF signals to be transmitted to the base station through two transmitting paths at the same time. Further, the RF processing circuit 130 may control the second switch module 123 and the third switch module 142 to conduct the receiving path where four receiving antennas of the plurality of receiving antenna sets are located according to the preset switching strategy, such that the target receiving antenna set may be determined based on the network information obtained corresponding by the plurality of receiving antenna sets, and the target transmitting antenna may be determined based on the major incoming wave direction of the target receiving antenna set. Exemplarily, the current transmitting antennas are transmitting antennas B1 and B2. When the target transmitting antennas are the transmitting antennas B1 and B2, the transmitting antennas B 1 and B2 are maintained to transmit the RF signals to the base station. When the target transmitting antennas are transmitting antennas B2 and B3, the second switching module 123 is controlled to disconnect a transmitting path in which the transmitting antenna B 1 is located and to conduct a transmitting path in which the transmitting antenna B3 is located, allowing the transmitting antennas B2 and B3 to transmit the RF signals to the base station.

As shown in FIG. 8, in an embodiment, the RF system further includes a substrate 150. The substrate 150 may be understood as a circuit board, such as a PCB, an FPC board, so on, configured to carry the transceiver circuit, the receiving circuit, and the RF processing circuit. The transceiver circuit, the receiving circuit, and the RF processing circuit are arranged on the substrate 150. The M transmitting antennas are distributed symmetrically about the substrate 150 and are spaced apart from the substrate 150. Exemplarily, the M transmitting antennas include transmitting antennas B1 and B2. The transmitting antenna B1 and the receiving antennas A1, A4, A6, and A7 are arranged on a first side 151 of the substrate 150, and the transmitting antenna B2 and the receiving antennas A2, A3, A5, and A8 are located on a second side 152 of the substrate 150. Specifically, the transmitting antenna B 1 has a fifth radiating plane located between the antenna pair 1 and the antenna pair 4. The transmitting antenna B2 has a sixth radiating plane located between the antenna pair 2 and the antenna pair 3.

In an embodiment, each of the plurality of receiving antennas and the transmitting antenna carries identification information for indicating the radiation plane of the respective antenna. The receiving antennas A1 and A4 have the radiating plane 1, the receiving antennas A6 and A7 have the radiating plane 2, the receiving antennas A2 and A3 have the radiating plane 3, the receiving antennas A5 and A8 have the radiating plane 4, the transmitting antenna B 1 has the radiating plane 5, and the transmitting antenna B2 has the radiating plane 6. Exemplarily, the radiating planes 1, 2, 3, 4, 5, and 6 may be identified by 001, 002, 003, 004, 005, and 006 respectively. That is, the identification information of each receiving antenna and each transmitting antenna in the present embodiment may be configured to indicate directional information corresponding to the radiating plane of the respective antenna, i.e., the azimuth range of the respective antenna. To be noted that the identification information of the radiating plane may be indicated by at least one of numbers, letters, and symbols. The present disclosure does not limit the identification information of the radiating plane.

In detail, a coordinate system may be constructed in the CPE. A plane in which the substrate 150 is located may be taken as an XZ plane of the coordinate system. A length direction of the substrate 150 may be taken as an X axis, and a width direction of the substrate 150, i.e., a height direction of the CPE, may be taken as an Z axis. A line perpendicular to the XZ plane may be taken as a Y axis of the coordinate system. The direction of the radiating plane of the receiving antenna located on the first side 151 of the substrate 150 includes the first direction and the second direction. An azimuth angle corresponding to the first direction is defined as a range from 0 to 90°, an azimuth angle corresponding to the second direction is defined as a range from 90° to 180°. An azimuth angle corresponding to the transmitting antenna B1 located on the first side 151 of the substrate 150 is in the range from 0 to 180°. A direction of the radiating plane of the receiving antenna located on the second side 152 of the substrate 150 includes the third direction and the fourth direction. An azimuth angle corresponding to the third direction is defined as a range from 180° to 270°, and an azimuth angle corresponding to the fourth direction is defined as a range from 270° to 360°. An azimuth angle corresponding to the transmitting antenna B2 located on the second side 152 of the substrate 150 is in the range from 180° to 360°.

The RF processing circuit 130 may construct in advance a transmitting antenna that matches each receiving antenna set. Specifically, the RF processing circuit 130 correspondingly obtains the identification information of each receiving antenna in each receiving antenna set, and further obtains the direction of the radiation plane of each receiving antenna in each receiving antenna set, such that the RF processing circuit 130 may obtain the incoming wave direction of each receiving antenna set. The incoming wave direction may be represented by the azimuth angle. For example, when an antenna set (A1, A4, A6, and A7) is the receiving antenna set, an azimuth angle of an incoming wave direction of the receiving antenna set (A1, A4, A6, and A7) is in a range from 0 to180°, and a transmitting antenna that is matched with the receiving antenna set (A1, A4, A6, and A7) is the transmitting antenna B 1 having identification information 005. When an antenna set (A2, A3, A4, and A8) is the receiving antenna set, an azimuth angle of an incoming wave direction of the receiving antenna set (A2, A3, A4, and A8) is in a range from 180 to 360°, and a transmitting antenna that is matched with the receiving antenna set (A2, A3, A4, and A8) is the transmitting antenna B2 having identification information 006. When an antenna set (A4, A6, A7, and A2) is the receiving antenna set, an azimuth angle of an incoming wave direction of the receiving antenna set (A4, A6, A7, and A2) is in a range from 0 to 360°, and a transmitting antenna that is matched with the receiving antenna set (A4, A6, A7, and A2) is the transmitting antenna B2 having identification information 006. That is, the RF processing circuit 130 may determine the matched transmitting antenna based on the azimuth angle of the receiving antenna set. An overlap between the azimuth angle corresponding to the radiating plane of the transmitting antenna matched to the receiving antenna set and the azimuth angle of the incoming wave direction of the matched receiving antenna set may meet a predetermined condition. The predetermined condition is associated with the number of transmitting antennas. Exemplarily, when the M is equal to 2, the corresponding predetermined condition is 180°, and when the M is equal to 3, the corresponding predetermined condition is 120°, and so on.

Specifically, the RF processing circuit 130 may sequentially control to conduct the radio frequency path between each receiving antenna set and the RF processing circuit 130, allowing each receiving antenna set to be in an operating state, such that the RF processing circuit 130 may measure the network information of each receiving antenna set receiving the RF signals. The network information may include raw and processed information associated with radio performance of the received RF signals, such as a receiving power, a transmitting power, Reference Signal Receiving Power (RSRP), Reference Signal Receiving Quality (RSRQ), a received signal strength indicator (RSSI), a signal to noise ratio (SNR), a rank of a MIMO channel matrix, a carrier to interference plus noise ratio (RS-CINR), a frame error rate, a bit error rate, channel quality measurement based on signal quality data (such as Ec/lo or c/No data), information about whether a response (answer) is being received from the base station corresponding to a request from a mobile terminal, information about whether a network access process is successful, and so on. For example, the present embodiment will be illustrated by taking the reference signal receiving power as the network information as an example. That is, the RF processing circuit 130 may obtain a plurality of reference signal reception powers corresponding to the plurality of receiving antenna sets, obtains a maximum value of the plurality of reference signal reception powers, takes the maximum value as the target network information, and determines the receiving antenna set corresponding to the target network information as the target receiving antenna set.

The RF processing circuit 130 obtains the identification information of each receiving antenna in the target receiving antenna set and obtains the incoming wave direction of the entire target receiving antenna set based on the identification information of each receiving antenna. The incoming wave direction provides targeted guidance for the major downlink coverage direction of the RF system during this operating time period. The RF processing circuit 130 may determine the target transmitting antenna based on a mapping relationship between the determined incoming wave direction and the identification information of each transmitting antenna and may control the transceiver circuit 120 to select the target transmitting antenna to transmit the RF signals.

Exemplarily, the single channel transmitting mode of the transceiver circuit 120 may be taken as an example. When the transmitting antennas B1 and B2 are distributed on the first side 151 and the second side 152 of the substrate 150, respectively. When the major incoming wave direction of the four antennas of the target receiving antenna set is in the range of 0-180°, the transmitting antenna B 1 located on the first side 151 of the substrate 150 having the identification information 005 may be correspondingly determined as the target transmitting antenna. When the incoming wave direction of the four antennas of the target receiving antenna set is in a range from 180° to 360°, the transmitting antenna B2 located on the second side 152 of the substrate 150 having the identification information 006 may be correspondingly determined as the target transmitting antenna.

The RF system in FIG. 5, 6 and 7 includes a plurality of transmitting antennas, and the plurality of transmitting antennas are distributed evenly at various orientations of the CPE. The RF system determines the target receiving antenna set based on the plurality of receiving antenna sets and obtains the identification information of each receiving antenna in each receiving antenna set. Further, the RF system obtains the incoming wave direction of the target receiving antenna set to determine the major coverage area of the RF system transmission to determine the target transmitting antenna. Further, the RF system controls the transceiver circuit 120 to switch transmitting paths to allow the target transmitting antenna to operate. In this way, requirements of equivalent isotropically radiated power (EIRP) for transmitting antennas made by regional regulations may be met. At the same time, the plurality of transmitting antennas may be switched to support implementation of transmitting antenna switched (TAS) technology or antenna switching diversity (ASDiV) function, transmission coverage blind spot may be avoided effectively, and coverage may be improved significantly. In addition, arranging the plurality of transmitting antennas on two sides of the substrate 150 reduces constraints on structures and RF front-end design caused by antenna design and layouts. A principle of having a shortest antenna connection line may be met, an insertion loss may be reduced, and introduction of additional thermal consumption may be avoided.

Compared to the RF system as described in FIG. 5, in the RF system as shown in FIG. 6, the transmitting paths corresponding to the two transmitting antennas are fixed. For example, the transmitting path of transmitting antenna B 1 is: RF transceiver 131 → first transceiver sub-circuit 120'-1 (transceiver module 131 → fourth switch unit 1231) → transmitting antenna B 1. The transmitting path of the transmitting antenna B2 is: RF transceiver 131 → second transceiver sub-circuit 120'-2 (transceiver module 131 → fourth switch unit 1231) → transmitting antenna B2. Compared to the RF system supporting the single-channel transmitting mode, a logic of switching between the transmitting antenna B1 and the transmitting antenna B2 in the RF system in the present embodiment is simpler and can be achieved more conveniently.

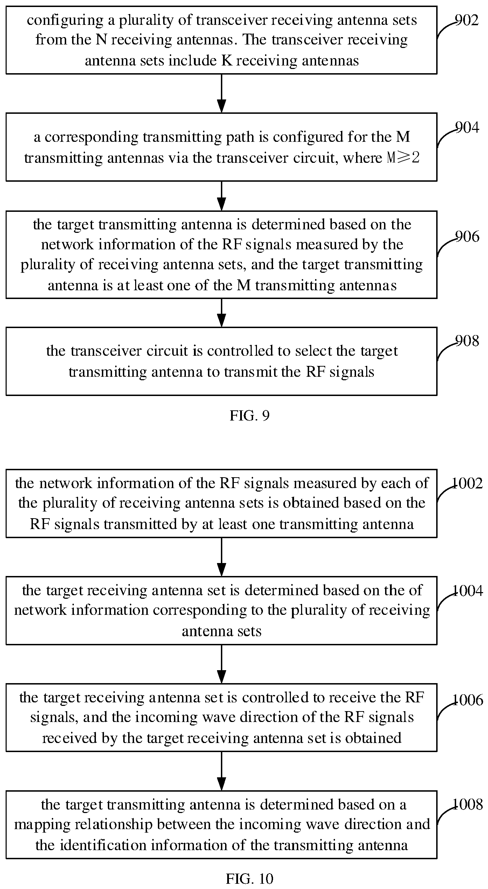

FIG. 9 is a flow chart of an antenna switching control method according to an embodiment of the present disclosure. The receiving antenna switching control method in the present embodiment may be applied to a CPE or a RF system in the CPE. The RF system includes an antenna set, a transceiver circuit, an RF processing circuit and a plurality of receiving circuits. The antenna set includes M transmitting antennas and N receiving antennas, the M ≥ 2 and the N ≥ 3, and each of the M and the N is a positive integer. Each of the M transmitting antennas and the N receiving antennas can transmit and receive RF signals in a predetermined frequency band. For example, the M transmitting antennas and the N receiving antennas may be 5G antennas, 4G antennas, Wi-Fi antennas, Bluetooth antennas, and so on, and are configured to transmit and receive RF signals in corresponding frequency bands. The number N of receiving antennas may be 2, 3, 4, 6, 8, 10 and other numbers to meet communication demands of the CPE.

As shown in FIG. 9, the receiving antenna switching control method includes operations 902 to 906.

In an operation 902, configuring a plurality of transceiver receiving antenna sets from the N receiving antennas. Each of the transceiver receiving antenna sets include K receiving antennas.

The CPE may select K antennas from the N receiving antennas to serve as the receiving antenna set and set the receiving antenna set to directionally meet a direction of a downlink incoming wave from the base station to receive the RF signals. That is, the receiving antenna set includes K receiving antennas. Specifically, the RF processing circuit may configure the number K of the receiving antennas in the receiving antenna set based on the multiple input multiple output (MIMO) technology that is supported by the RF system. The RF processing circuit may configure the N receiving antennas into the plurality of receiving antenna sets based on predetermined rules, allowing each receiving antenna set to include K receiving antennas. Exemplarily, when the CPE supports 2*2 MIMO, a receiving antenna set of the CPE may include 2 receiving antennas; and when the CPE supports 4*4 MIMO, a receiving antenna set of the CPE may include 4 receiving antennas.

In an operation 904, a corresponding transmitting path is configured for the M transmitting antennas via the transceiver circuit.

The transceiver circuit is connected to M transmitting antennas and at least two receiving antennas to selectively conduct the transmitting path in which at least one transmitting antenna is located or the receiving path in which any receiving antenna is located and to support transceiving the RF signals. That is, the RF system may be configured with one transmitting path for each transmitting antenna based on the transceiver circuit to achieve transmission of the RF signals. The transmitting antennas and the receiving antennas connected to the transceiver circuit may be controlled independently. That is, the receiving path where the receiving antenna is located may be arranged separately from the transmitting path where the transmitting antenna is located.

In an operation 906, the target transmitting antenna is determined based on the network information of the RF signals measured by the plurality of receiving antenna sets, and the target transmitting antenna is at least one of the M transmitting antennas.

When the transceiver circuit selects a transmitting antenna (one or two) to transmit RF signals, the RF system may control the transceiver circuit and the plurality of receiving circuits to control the plurality of receiving antenna sets to receive the RF signals based on the preset switching strategy. Further, the RF system correspondingly measures the network information of the RF signals based on the plurality of receiving antenna sets. The RF system determines the target receiving antenna set based on the network information corresponding to the plurality of receiving antenna sets, and further determines the target transmitting antenna based on the incoming wave direction of the RF signals received by the target receiving antenna set.

In an operation 908, the transceiver circuit is controlled to select the target transmitting antenna to transmit the RF signals.

After the target transmitting antenna is determined, the RF system may control the transceiver circuit to select the target transmitting antenna to transmit the RF signals.

According to the receiving antenna switching control method in the present embodiment, the plurality of transmitting and receiving antenna sets are configured from the N receiving antennas. The transmitting and receiving antenna sets include K antennas. The corresponding transmitting path is configured for the M transmitting antennas via the transceiver circuit. The target transmitting antenna is determined based on the network information of the RF signals measured by the plurality of receiving antenna sets. The transceiver circuit is controlled to select the target transmitting antenna to transmit the RF signals. The RF signals can be transmitted to the base station through a certain direction, such that the throughput may be increased. At the same time, the plurality of transmitting antennas are arranged to expand the transmission coverage of the RF system.

As shown in FIG. 10, in an embodiment, determining the target transmitting antenna based on the network information of the RF signals measured by the plurality of receiving antenna sets may include the following operations.

In an operation 1002, the network information of the RF signals measured by each of the plurality of receiving antenna sets is obtained based on the RF signals transmitted by at least one transmitting antenna.

In an operation 1004, the target receiving antenna set is determined based on the of network information corresponding to the plurality of receiving antenna sets.

The RF system may sequentially control conduction of a RF path between each receiving antenna set and the RF processing circuit based on the transceiver circuit supporting the single/dual channel transmitting mode, such that each receiving antenna set may be in the operating state, and the network information of the RF signals received by each receiving antenna set may be measured correspondingly. The single channel transmitting mode may be understood as the RF system conducting one transmitting path of one transmitting antenna at a time. In the single channel transmitting mode, only one transmitting antenna is operating to transmit the RF signals. The dual channel transmitting mode can be understood as the RF system conducting transmitting paths of two transmitting antennas at the same time, and two transmitting antennas are operating to transmit the RF signals.

The network information may include raw and processed information associated with radio performance of the received RF signals, such as a receiving power, a transmitting power, Reference Signal Receiving Power (RSRP), Reference Signal Receiving Quality (RSRQ), a received signal strength indicator (RSSI), a signal to noise ratio (SNR), a rank of a MIMO channel matrix, a carrier to interference plus noise ratio (RS-CINR), a frame error rate, a bit error rate, channel quality measurement based on signal quality data (such as Ec/lo or c/No data), information about whether a response (answer) is being received from the base station corresponding to a request from a mobile terminal, information about whether a network access process is successful, and so on. For example, the present embodiment will be illustrated by taking the reference signal receiving power as the network information as an example. That is, the RF system may obtain a plurality of reference signal reception powers corresponding to the plurality of receiving antenna sets, obtains a maximum value of the plurality of reference signal reception powers, takes the maximum value as the target network information, and determines the receiving antenna set corresponding to the target network information as the target receiving antenna set.

In an operation 1006, the target receiving antenna set is controlled to receive the RF signals, and the incoming wave direction of the RF signals received by the target receiving antenna set is obtained.

The RF system may control the transceiver circuit and the plurality of receiving circuits to conduct the receiving path of each receiving antenna in the target receiving antenna set, and correspondingly obtain the incoming wave direction of the RF signals received by the target receiving antenna set.

Each of the receiving antennas and the transmitting antennas carries identification information for indicating the radiation plane of each antenna. Specifically, obtaining the incoming wave direction of the RF signals received by the target receiving antenna set includes the following. The identification information of each receiving antenna in the target receiving antenna set is obtained. The incoming wave direction of the RF signals is obtained based on the identification information.

Exemplarily, eight receiving antennas and two transmitting antennas are used as an example. The eight receiving antennas are arranged into four antenna pairs, denoted as an antenna pair 1, an antenna pair 2, an antenna pair 3, and an antenna pair 4. The four antenna pairs (A1, A4), (A6, A7), (A2, A3) and (A5, A8) are spaced apart from each other and arranged on four planes along the circumference of the CPE. Two antennas of one antenna pair are distributed on one plane. The receiving antennas A1 and A4 have the radiating plane 1, the receiving antennas A6 and A7 have the radiating plane 2, the receiving antennas A2 and A3 have the radiating plane 3, the receiving antennas A5 and A8 have the radiating plane 4, the transmitting antenna B1 has the radiating plane 5, and the transmitting antenna B2 has the radiating plane 6. Exemplarily, the radiating planes 1, 2, 3, 4, 5, and 6 may be identified by 001, 002, 003, 004, 005, and 006 respectively. That is, the identification information of each receiving antenna and each transmitting antenna in the present embodiment may be configured to indicate directional information corresponding to the radiating plane of the respective antenna, i.e., the azimuth range of the respective antenna.

The RF processing circuit correspondingly obtains the identification information of each receiving antenna in each receiving antenna set, and further obtains the direction of the radiation plane of each receiving antenna in each receiving antenna set, such that the RF processing circuit may obtain the incoming wave direction of each receiving antenna set. The incoming wave direction may be represented by the azimuth angle. For example, when an antenna set (A1, A4, A6, and A7) is the receiving antenna set, an azimuth angle of an incoming wave direction of the receiving antenna set (A1, A4, A6, and A7) is in a range from 0 to 180°. When an antenna set (A2, A3, A4, and A8) is the receiving antenna set, an azimuth angle of an incoming wave direction of the receiving antenna set (A2, A3, A4, and A8) is in a range from 180 to 360°. When an antenna set (A4, A6, A7, and A2) is the receiving antenna set, an azimuth angle of an incoming wave direction of the receiving antenna set (A4, A6, A7, and A2) is in a range from 0 to 270°.

In an operation 1008, the target transmitting antenna is determined based on a mapping relationship between the incoming wave direction and the identification information of the transmitting antenna.

The RF processing circuit 130 may be construct in mapping relationship between the incoming wave direction of each receiving antenna set and the matched transmitting antenna. Specifically, when an antenna set (A1, A4, A6, and A7) is the receiving antenna set, an azimuth angle of an incoming wave direction of the receiving antenna set (A1, A4, A6, and A7) is in a range from 0 to180°, and a transmitting antenna that is matched with the receiving antenna set (A1, A4, A6, and A7) is the transmitting antenna B 1 having identification information 005. When an antenna set (A2, A3, A4, and A8) is the receiving antenna set, an azimuth angle of an incoming wave direction of the receiving antenna set (A2, A3, A4, and A8) is in a range from 180 to 360°, and a transmitting antenna that is matched with the receiving antenna set (A2, A3, A4, and A8) is the transmitting antenna B2 having identification information 006. When an antenna set (A4, A6, A7, and A2) is the receiving antenna set, an azimuth angle of an incoming wave direction of the receiving antenna set (A4, A6, A7, and A2) is in a range from 0 to 270°, and a transmitting antenna that is matched with the receiving antenna set (A4, A6, A7, and A2) is the transmitting antenna B2 having identification information 006.

In an embodiment, controlling the transceiver circuit to select the target transmitting antenna to transmit the RF signals includes the following. When the identification information of the target transmitting antenna matches the identification information of the transmitting antenna that is currently operating to transmit signals, the transmitting antenna that is currently operating to transmit signals is determined as the target transmitting antenna.

In an embodiment, controlling the transceiver circuit to select the target transmitting antenna to transmit the RF signals, includes the following. When the identification information of the target transmitting antenna does not match the identification information of the transmitting antenna that is currently operating to transmit signals, the transceiver circuit is controlled to switch to allow the target transmitting antenna to operate to transmit the RF signals.

In a process of determining whether the identification information of the transmitting antenna is matched, it may be determined whether the identification information of the transmitting antenna that is currently operating to transmit signals is the same as the identification information of target transmitting antenna. When the identification information of the transmitting antenna that is currently operating to transmit signals is the same as the identification information of target transmitting antenna, the identification information of the transmitting antenna that is currently operating to transmit signals is determined as matching with the identification information of target transmitting antenna. When the identification information of the transmitting antenna that is currently operating to transmit signals is different from the identification information of target transmitting antenna, the identification information of the transmitting antenna that is currently operating to transmit signals is determined as not matching with the identification information of target transmitting antenna. Exemplarily, the identification information of the transmitting antenna that is currently operating to transmit signals is 005. When the identification information of the target transmitting antenna is also 005, the transmitting antenna that is currently operating to transmit signals is maintained to transmit RF signals to the base station. When the identification information of the target transmitting antenna is 006, the transceiver circuit is controlled to disconnect the transmitting path where the transmitting antenna B1 having the identification information of 005 is located, and to conduct the transmitting path where the transmitting antenna B2 having the identification information of 006 is located, such that the transmitting antenna B2 having the identification information of 006 transmits the RF signals to the base station.

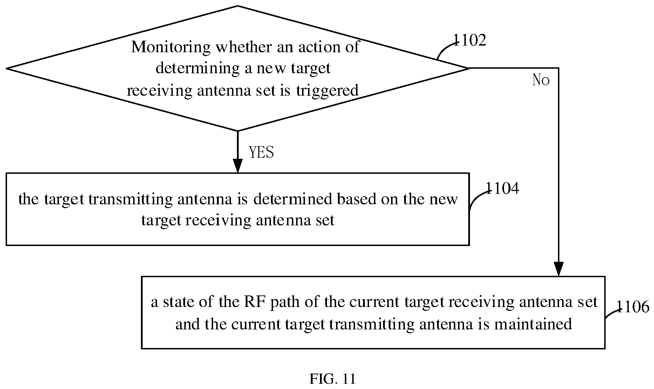

As shown in FIG. 11, in an embodiment, the antenna switching control method includes the following.

In an operation 1102, it is monitored whether an action of determining a new target receiving antenna set is triggered.

In an embodiment, the RF system may periodically trigger the action of determining the new target receiving antenna set, for example, every 2 seconds.

In some embodiments, the RF system may also monitor the network information measured based on the target receiving antenna set that is currently operating. The RF system may trigger the action of determining the new target receiving antenna set when the network information is less a predetermined threshold value.

To be noted that, the present embodiment does not further limit the triggering the action of determining the new target receiving antenna set.

In an operation 1104, when triggering the action of determining the new target receiving antenna set is monitored, the target transmitting antenna is determined based on the new target receiving antenna set.

When triggering the action of determining the new target receiving antenna set is monitored, the RF system may control each receiving antenna set to receive the RF signals, determine the new target receiving antenna set based on the measured network information of each receiving antenna set, and determine the target transmitting antenna based on the new target receiving antenna set.

In an operation 1106, when triggering the action of determining the new target receiving antenna set is not monitored, a state of the RF path of the current target receiving antenna set and the current target transmitting antenna is maintained.

When triggering the action of determining the new target receiving antenna set is not monitored, the current target receiving antenna set is maintained to receive the RF signals, and the current target transmitting antenna is also maintained to transmit the RF signals.

According to the antenna switching control method in the present embodiment, the target receiving antenna set may be updated. A new target transmitting antenna may be determined based on the new target receiving antenna set. In this way, an optimal antenna transmitting/receiving direction for communicating with the base station may be determined dynamically, "directionally" "meeting" the uplink and downlink incoming wave directions of the base station may be performed to transmit and receive 5G signals, such that overall signal coverage may be improved, and the throughput may be improved.

It shall be understood that although the operations in the flow charts in FIGs. 9-11 are shown in an order indicated by arrows, these operations are not necessarily performed in the order indicated by the arrows. Unless expressly stated herein, there is no strict sequential limitation on executing these operations. These operations may be performed in any other order. Furthermore, at least some of the operations in FIGs. 9-11 may include a plurality of sub-operations or stages. The sub-operations or stages are not necessarily performed at the same time but may be performed at different time points. The sub-operations or stages may not be performed sequentially. Instead, sub-operations or stages may be performed alternately or alternatively with other operations or at least some of sub-operations or stages of other operations.

Embodiments of the present disclosure further provide a customer premise equipment, including the radio frequency system of any of the above embodiments.

Embodiments of the present disclosure further provide a customer premise equipment including a memory and a processor. The memory stores computer programs. The computer programs, when executed by the processor, are configured to cause the processor to perform the operations of the receiving antenna switching control method of any of the above embodiments.

Embodiments of the present disclosure further provide a computer-readable storage medium. One or more non-volatile computer-readable storage media include computer-executable instructions. When the computer-executable instructions are executed by one or more processors, the processors are caused to perform the operations of the receiving antenna switching control method of any of the above embodiments.

A computer program product includes instructions. When the instructions are run on a computer, the computer is caused to perform the receiving antenna switching control method.

Any reference to a memory, storage, database or other medium used in the present disclosure may include a non-volatile and/or volatile memory. The non-volatile memory may include a read-only memory (ROM), a programmable ROM (PROM), an electrically programmable ROM (EPROM), an electrically erasable programmable ROM (EEPROM), or flash memory. The volatile memory may include a random access memory (RAM), which is used as an external cache memory. For illustration and not limitation, the RAM is available in various forms, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a RAM bus (Rambus) direct RAM (RDRAM), a direct memory bus dynamic RAM (DRDRAM), and a memory bus dynamic RAM (RDRAM).

The above embodiments show only some embodiments of the present disclosure, which are described in a more specific and detailed manner, but the description shall not be interpreted as limiting the scope of the present disclosure. To be noted that, any ordinary skilled person in the art may perform various variations and improvements without departing from the conception of the present disclosure. These variations and improvements shall fall within the scope of present disclosure. Therefore, the scope of the patent disclosure shall be governed by the attached claims.

## Claims

1. A radio frequency system, applied to a customer premise device, the radio frequency comprising:
an antenna set, comprising M transmitting antennas and N receiving antennas;
a transceiver circuit, connected to the M transmitting antennas and at least two of the N receiving antennas and configured to selectively conduct a transmitting path in which at least one of the M transmitting antennas is located or a receiving path in which any of the at least two of the N receiving antennas is located and configured to support transceiving radio frequency signals;
a plurality of receiving circuits, connected to the remaining receiving antennas of the N receiving antennas other than the at least two receiving antennas and configured to support reception of the radio frequency signals;
a radio frequency processing circuit, connected to the transceiver circuit and the plurality of receiving circuits and configured to determine a target transmitting antenna based on network information of the radio frequency signals measured by a plurality of receiving antenna sets and configured to control the transceiver circuit to select the target transmitting antenna to transmit the radio frequency signals, wherein each of the plurality of receiving antenna sets comprises K receiving antennas, M ≥ 2, 2 ≤ K ≤ N, and N ≥ 3, the target transmitting antenna is at least one of the M transmitting antennas.

2. The radio frequency system according to claim 1, wherein the N receiving antennas are spaced apart from each other and are arranged along a circumference of the customer premise device; the M transmitting antennas are spaced apart from each other and are arranged along the circumference of the customer premise device; radiating planes of the N receiving antennas are orientated towards at least three different directions; and at least two of the radiating planes of the N receiving antennas that are adjacent to each other and orientated towards different directions are comprised in the K receiving antennas.

3. The radio frequency system according to claim 1, wherein the transceiver circuit supports a single-channel transmitting mode, the transceiver circuit comprises:
a transceiver module, connected to the radio frequency processing circuit and configured to support transceiving the radio frequency signals;
a first switch module, wherein a first end of the first switch module is connected to the transceiver module, a plurality of second ends of the first switch module are connected to the M transmitting antennas and at least one of the N receiving antennas in one-to-one correspondence, the first switch module is configured to selectively conduct the transmitting path in which any of the M transmitting antennas is located or the receiving path in which any of the N receiving antennas is located.

4. The radio frequency system according to claim 3, wherein the N equals eight, and the K equals four, the number of the plurality of receiving circuits is three, the plurality of second ends of the first switch module are connected to the M transmitting antennas and two of the four receiving antennas in one-to-one correspondence; and
each of the plurality of receiving circuits is connected to the other two of the four receiving antennas and is configured to select and conduct the receiving path in which any of the receiving antennas is located.

5. The radio frequency system according to claim 4, wherein the first switch module comprises: a first switch unit, a second switch unit, and a third switch unit;
a first end of the first switch unit is connected to the transceiver module, one second end of the first switch unit is connected to the two receiving antennas via the second switch unit; and
the other second end of the first switch unit is connected to the M transmitting antennas via the third switch unit.

6. The radio frequency system according to claim 1, wherein the transceiver circuit supports a dual-channel transmitting mode, the transceiver circuit comprises two transceiver sub-circuits, wherein each of the two transceiver sub-circuits comprises:
a transceiver module, connected to the radio frequency processing circuit and configured to support transceiving the radio frequency signals; and
a second switch module, wherein a first end of the second switch module is connected to the transceiver module, a plurality of second ends of the second switch module are connected to at least one of the M transmitting antennas and at least one of the N receiving antennas in one-to-one correspondence, and the transceiver module is connected to the transceiver circuit.

7. The radio frequency system according to claim 6, wherein the transceiver circuit supports the dual-channel transmitting mode, the number of the plurality of receiving circuits is two, the N equals eight, and the K equals four; the plurality of second ends of the second switch module are connected to at least one of the M transmitting antennas and two of the four receiving antennas in one-to-one correspondence; and each of the plurality of receiving circuits is connected to the other two of the four receiving antennas and configured to select to conduct the receiving path in which any of the receiving antennas is located.

8. The radio frequency system according to claim 7, wherein the second switch module comprises a fourth switch unit and a fifth switch unit, a first end of the fourth switch unit is connected to the transceiver module, one of the plurality of second ends of the fourth switch unit is connected to the two receiving antennas via the fifth switch unit, and the remaining of the plurality of second ends of the fourth switch unit are connected to at least one of the M transmitting antennas correspondingly.

9. The radio frequency system according to claim 1, wherein each of the plurality of receiving circuits comprises:
a receiving module, connected to the radio frequency processing circuit to support receiving the radio frequency signals; and
a third switch module, wherein a first end of the third switch module is connected to the receiving module, and two second ends of the third switch module are connected to two of the receiving antennas respectively.

10. The radio frequency system according to claim 1, wherein each of the M transmitting antennas and the N receiving antennas carries identification information, and the transceiver circuit is configured to:
determine a target receiving antenna set based on the network information corresponding to the plurality of receiving antenna sets;
obtain the identification information of each receiving antenna in the target receiving antenna set;
obtain an incoming wave direction of the radio frequency signals based on the identification information;
determine the target transmitting antenna based on a mapping relationship between the incoming wave direction and the identification information of the transmitting antennas, and control the transceiver circuit to select the target transmitting antenna to transmit the radio frequency signals.

11. The radio frequency system according to claim 1, further comprising:
a substrate, wherein the transceiver circuit, the plurality of receiving circuits, and the radio frequency processing circuit are arranged on the substrate, and the M transmitting antennas are distributed symmetrically about the substrate and are spaced apart from the substrate.

12. The radio frequency system according to claim 11, wherein,
the N receiving antennas comprise eight receiving antennas that are spaced apart from each other and are evenly distributed along the circumference of the customer premise equipment, the eight receiving antennas are noted as a receiving antenna A1, a receiving antenna A2, a receiving antenna A3, a receiving antenna A4, a receiving antenna A5, a receiving antenna A6, a receiving antenna A7, and a receiving antenna A8;
radiating surfaces of the receiving antenna A1 and the receiving antenna A4 are orientated towards one direction, radiating surfaces of the receiving antenna A2 and the receiving antenna A3 are orientated towards one direction, radiating surfaces of the receiving antenna A5 and the receiving antenna A8 are orientated towards one direction, and radiating surfaces of the receiving antenna A6 and the receiving antenna A7 are orientated towards one direction;
the M transmitting antennas comprise a transmitting antenna B1 and a transmitting antenna B2;
the transmitting antenna B 1, the receiving antenna A1, the receiving antenna A4, the receiving antenna A6, and the receiving antenna A7 are disposed on one side of the substrate, and the transmitting antenna B2, the receiving antenna A2, the receiving antenna A3, the receiving antenna A5, and the receiving antenna A8 are disposed on the other side of the substrate.

13. An antenna switching control method, comprising:
configuring a plurality of transmitting and receiving antenna sets based on N receiving antennas, wherein each of the plurality of transmitting and receiving antenna sets comprise K antennas;
configuring corresponding transmitting paths for M transmitting antennas via a transceiver circuit;
determining a target transmitting antenna based on network information of radio frequency signals measured by a plurality of receiving antenna sets;
controlling the transceiver circuit to select the target transmitting antenna to transmit the radio frequency signals, wherein each of the plurality of receiving antenna sets comprises K receiving antennas, M ≥ 2, 2 ≤ K ≤ N, and N ≥ 3, the target transmitting antenna is at least one of the M transmitting antennas.

14. The method according to claim 13, wherein the determining a target transmitting antenna based on network information of radio frequency signals measured by a plurality of receiving antenna sets, comprises:
obtaining the network information of the radio frequency signals measured by the plurality of the receiving antenna sets based on the radio frequency signals that are being transmitted by at least one of the M transmitting antennas;
determining a target receiving antenna set based on the network information corresponding to the plurality of receiving antenna sets;
controlling the target receiving antenna set to receive the radio frequency signals and obtaining an incoming wave direction of the radio frequency signals received by the target receiving antenna set; and
determining the target transmitting antenna based on a mapping relationship between the incoming wave direction and the identification information of the transmitting antennas.

15. The method according to claim 14, wherein the obtaining an incoming wave direction of the radio frequency signals received by the target receiving antenna set, comprises:
obtaining identification information of each receiving antenna in the target receiving antenna set; and
obtaining the incoming wave direction of the radio frequency signals based on the identification information.

16. The method according to claim 14, wherein the controlling the transceiver circuit to select the target transmitting antenna to transmit the radio frequency signals, comprises:
determining a transmitting antenna that is being operating to transmit signals as the target transmitting antenna in response to the identification information of the target transmitting antenna matching identification information of the transmitting antenna that is being operating to transmit signals; and
controlling the transceiver circuit to switch to allow the target transmitting antenna to transmit the radio frequency signals in response to the identification information of the target transmitting antenna not matching the identification information of the transmitting antenna that is being operating to transmit signals.

17. The method according to any one of claims 13 to 15, further comprising:
monitoring whether an action of determining a new target receiving antenna set is triggered;
determining the target transmitting antenna based on the new target receiving antenna set in response to the action of determining the new target receiving antenna set being triggered; and
maintaining a state of radio frequency paths of the target receiving antenna set and the target transmitting antenna in response to the action of determining the new target receiving antenna set not being triggered.

18. A customer premise equipment, comprising the radio frequency system according to any one of claims 1 to 12.

19. A customer premise equipment, comprising a memory and a processor, wherein the processor stores computer programs, and the computer programs are configured to, when being executed by the processor, cause the processor to perform the antenna switching control method according to any one of claims 13 to 17.

20. A computer-readable storage medium, having computer programs stored, wherein the computer programs are configured to, when being executed by a processor, perform the antenna switching control method according to any one of claims 13 to 17.
